# EUROPÄISCHE PATENTANMELDUNG

(11) **EP 3 338 872 A1**
(43) Veröffentlichungstag der Anmeldung: **27.06.2018**
(21) Anmeldenummer: 16002722.3
(22) Anmeldetag: 22.12.2016
(51) Int. Cl.: B01D 21/24, C10G 9/00

(54) **NUTZUNG DES SUMPFES VON WASSERWÄSCHEN BESTEHENDER GAS-CRACKER FÜR DEN ABZUG VON KOKS/TEER**

(71) Anmelder: Linde Aktiengesellschaft, 80331 München (DE)
(72) Erfinder: Matten, Christian, 82049 Pullach (DE); Kunkel, Josef, 82131 Gauting (DE); Baus, Michael, 82166 Gräfelfing (DE); Bauer, Ludwig, 85114 Buxheim (DE); Kracker, Gunther, 83629 Weyarn (DE)
(74) Vertreter: Meilinger, Claudia Sabine

(57) **Zusammenfassung**

Die Erfindung betrifft eine Einrichtung (1), die eine Waschkolonne (2) zum Waschen eines Spaltgases (S) mit einem wässrigen Waschmittel (W) sowie einen Schwerkraftabscheider (3) zum Abtrennen von Kohlenwasserstoffen aus dem wässrigen Waschmittel (W) aufweist, wobei die Waschkolonne (2) einen umlaufenden Mantel (20) aufweist, der einen Innenraum (I) der Waschkolonne (2) umgibt und sich entlang einer Längsachse (z) erstreckt, sowie einen nach unten hin sich an den Mantel (20) anschließenden Boden (21), wobei ein unterster Abschnitt des Mantels (20) zusammen mit dem Boden (21) einen Sumpf (23) der Waschkolonne umgibt, und wobei eine Strömungsverbindung (30) den Sumpf (23) der Waschkolonne (2) mit dem Schwerkraftabscheider (3) verbindet, so dass das Waschmittel (W) und darin befindliche leichte Kohlenwasserstoffe über die Strömungsverbindung aus dem Sumpf (23) der Waschkolonne (2) in den Schwerkraftabscheider (3) abziehbar sind. Erfindungsgemäß ist vorgesehen, dass die Strömungsverbindung (30) einen im Sumpf (23) koaxial zur Längsachse (z) angeordneten Rohrleitungsabschnitt (35) mit einem nach oben hin geöffneten Trichter (36) aufweist. Weiterhin betrifft die Erfindung ein Verfahren zum Betreiben der Einrichtung (1) sowie ein Verfahren zum Nachrüsten einer herkömmlichen Waschkolonne (2).

## Beschreibung

Die Erfindung betrifft eine Einrichtung mit einer Waschkolonne und einem Schwerkraftabscheider.

Eine solche Kolonne dient dazu, ein Spaltgas mit einem wässrigen Waschmittel (insbesondere Wasser) zu beaufschlagen, wobei der Schwerkraftabscheider dazu dient, im Waschmittel befindliche Verunreinigungen, insbesondere leichtere Kohlenwasserstoffe, aus dem Waschmittel abzutrennen.

Solche Einrichtungen können z.B. in Anlagen zur Erzeugung von Kohlenwasserstoffen durch die Spaltung eines kohlenwasserstoffhaltigen Einsatzes verwendet werden. Ein Beispiel für eine solche Anlage sind Olefinanlagen, insbesondere Ethylenanlagen, anhand derer im Folgenden die vorliegende Erfindung näher beschrieben werden soll. Grundsätzlich lässt sich die Erfindung jedoch allgemein im Rahmen der Olefinherstellung bzw. bei einer Wasserwäsche von kohlenwasserstoffhaltigen Gasen verwenden, bei der Koks, leichte und schwere Kohlenwasserstoffe, insbesondere Teer, aus einer wässrigen Phase mittels Schwerkraft abgetrennt werden müssen.

Der kohlenwasserstoffhaltige Einsatz wird in einer Ethylenanlage mit heißem Dampf vermischt und in einen Spaltofen geführt. Hierin wird das Kohlenwasserstoff-DampfGemisch solchermaßen erhitzt, dass sich die längerkettigen Kohlenwasserstoffe in kürzerkettige Kohlenwasserstoffe aufspalten. Um eine unerwünschte Weiterreaktion der kürzerkettigen Kohlenwasserstoffe zu verhindern, wird das so genannte Spaltgas nach dem Spaltofen möglichst schnell wieder abgekühlt. Hierzu wird das Spaltgas aus dem Spaltofen in die eingangs beschriebene Waschkolonne geführt, die auch als Quenchkolonne bezeichnet wird.

In der Quenchkolonne wird das Spaltgas durch den Kontakt mit dem wässrigen Waschmittel, insbesondere in Form von Wasser, gleichzeitig abgekühlt und gewaschen.

Das Spaltgas wird in einen unteren Abschnitt des Innenraumes der Waschkolonne eingeleitet und durchströmt den Innenraum der Waschkolonne von unten entlang der Längsachse der Kolonne nach oben, so dass das gereinigte und abgekühlte Spaltgas die Waschkolonne über den Kopf der Kolonne verlässt.

Das wässrige Waschmittel wird über den Kopf der Waschkolonne aufgegeben. Spaltgas und Waschmittel passieren daher im Gegenstrom im Innenraum der Kolonne, wodurch ein intensiver Wärme und Stoffaustausch erreicht wird.

Die Waschkolonne kann insbesondere verschiedene Sektionen mit mehreren Kaminböden aufweisen, auf denen sich die Wasserphase bzw. das Waschmittel sammelt und abgezogen werden kann. In einem derartigen Fall wird jede Sektion separat von oben mit dem wässrigen Waschmittel beaufschlagt.

In der Waschkolonne wird das Spaltgas nicht nur abgekühlt, sondern von festen Partikeln, wie Kokspartikeln, gereinigt, die sich bei der thermischen Spaltung im Spaltofen bilden. Diese festen Partikel werden in der Waschkolonne durch das wässrige Waschmittel aus dem Spaltgas herausgewaschen. Diese festen Partikel, sowie leichte, insbesondere flüssige, und sonstige schwere Kohlenwasserstoffe (wie z.B. Teer) fallen bei der Wasserwäsche im Sumpf der Kolonne an und müssen aus dem Prozess ausgeschleust werden.

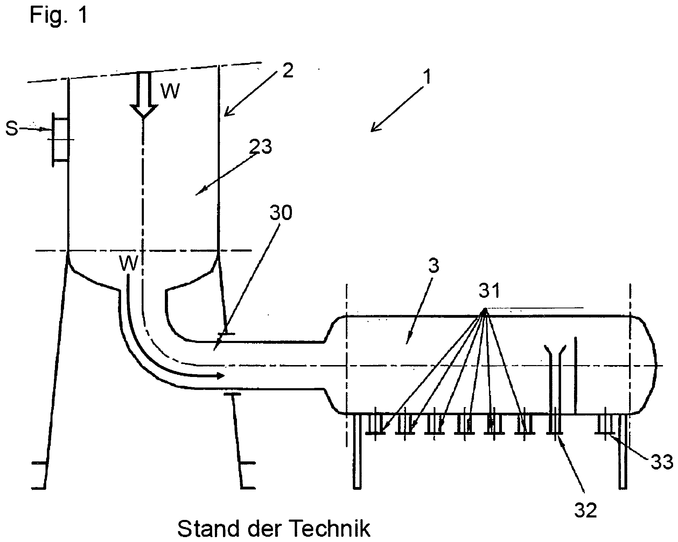

Figur 1 zeigt diesbezüglich eine Einrichtung nach dem Stand der Technik, bei der ein Schwerkraftabscheider 3 in Form eines 3-Phasen-Dekanters die Aufgabe der Reinigung des Waschmittels W übernimmt. Hierbei wird das zum Quenchen des Spaltgases S verwendete wässrige Waschmittel W, das mit Koks und schweren Kohlenwasserstoffen wie z.B. Teer und Schweröl sowie mit leichteren, insbesondere flüssigen, Kohlenwasserstoffe verunreinigt ist, aus dem Sumpf 23 der Waschkolonne 2 über eine Strömungsverbindung 30 abgezogen. Die Feststoffe fallen am Boden des Dekanters 3 als zähe Masse an und können über mehrere Stutzen 31 aus dem Dekanter 3 abgelassen werden. Das wässrige Waschmittel W kann aus dem Dekanter 3 über den Stutzen 32 entnommen werden. Weiterhin können über den Stutzen 33 leichte bzw. flüssige Kohlenwasserstoffe abgezogen werden.

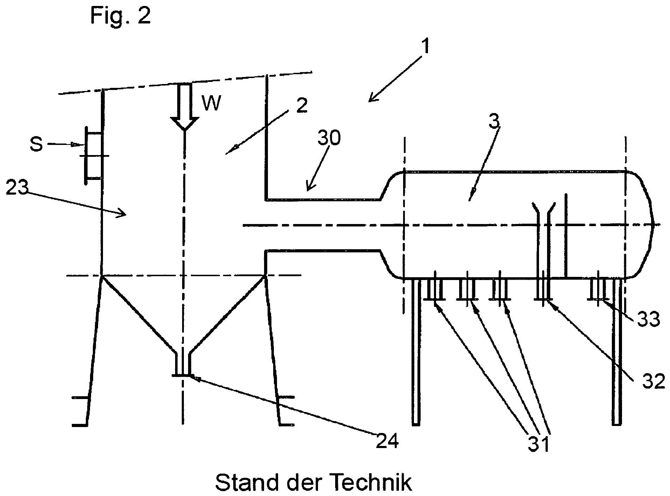

Figur 2 zeigt eine weitere Einrichtung aus dem Stand der Technik, bei der die Waschkolonne 2 am Boden einen Abzugsstutzen 24 für Verunreinigungen des Waschmittels W in Form von Koks und schwereren Kohlenwasserstoffen, wie z.B. Teer und Schweröl, aufweist, wobei oberhalb des Abzugsstutzens 24 eine wässrige Phase des Waschmittels W über die Strömungsverbindung 30 abgezogen wird, die vorwiegend durch leichtere Kohlenwasserstoffe verunreinigt ist. Diese wässrige Phase wird wiederum in einen Schwerkraftabscheider 3 in Form eines 3-Phasen-Dekanters gegeben. Bei der Variante gemäß Figur 2 wird der Sumpf 23 der Kolonne 2 bereits als Schwerkraftabscheider verwendet, so dass im eigentlichen Schwerkraftabscheider 3 mit Vorteil weniger schwere Kohlenwasserstoffe anfallen. Somit reduziert sich mit Vorteil die Belastung des Dekanters 3 im Wesentlichen auf die Auftrennung von Wasser und flüssigen Kohlenwasserstoffen, wodurch dieser kleiner gebaut werden kann.

Der vorliegenden Erfindung liegt daher die Aufgabe zugrunde, eine aus dem Stand der Technik bekannte Einrichtung (insbesondere gemäß Figur 1) dahingehend weiterzubilden, dass die Belastung des nachgeschalteten Schwerkraftabscheiders mit Koks bzw. schwereren Kohlenwasserstoffen, wie z. B. Teer und Schweröl, verringert wird.

Diese Aufgabe wird durch eine Einrichtung mit den Merkmalen des Anspruchs 1 gelöst.

Gemäß Anspruch 1 ist danach eine Einrichtung vorgesehen, die eine Waschkolonne zum Waschen eines Spaltgases mit einem wässrigen Waschmittel (z.B. Wasser) sowie einen Schwerkraftabscheider zum Abtrennen von Kohlenwasserstoffen aus dem wässrigen Waschmittel aufweist, wobei die Waschkolonne einen umlaufenden Mantel aufweist, der einen Innenraum der Waschkolonne umgibt und sich entlang einer Längsachse erstreckt, sowie einen nach unten hin sich an den Mantel anschließenden Boden, wobei ein unterster Abschnitt des Mantels zusammen mit dem Boden einen Sumpf der Waschkolonne umgibt, und wobei eine Strömungsverbindung den Sumpf der Waschkolonne mit dem Schwerkraftabscheider verbindet, so dass wässriges Waschmittel und darin befindliche leichte Kohlenwasserstoffe, über die Strömungsverbindung aus dem Sumpf der Waschkolonne in den Schwerkraftabscheider gelangen können, wobei erfindungsgemäß die Strömungsverbindung einen im Sumpf koaxial zur Längsachse angeordneten Rohrleitungsabschnitt mit einem nach oben hin geöffneten Trichter aufweist. Als leichte Kohlenwasserstoffe werden im Rahmen der Erfindung insbesondere diejenigen Kohlenwasserstoffe bezeichnet, die sich im Schwerkraftabscheider bzw. im Dreiphasendekanter oberhalb der Wasserphase abscheiden und insbesondere über das Wehr in den zweiten Abschnitt des Schwerkraftabscheiders strömen (siehe auch unten). Derartige leichte Kohlenwasserstoffe können z.B. im verflüssigten Zustand eine Dichte zwischen 400 und 900 kg/m³ aufweisen und sind daher leichter als Wasser. Daher scheiden sie sich im Dreiphasendekanter bzw. Schwerkraftabscheider auf der Wasserphase ab.

Leichte Kohlenwasserstoffe im Sinne der vorliegenden Erfindung können des Weiteren insbesondere Kohlenwasserstoffe sein, die weniger als 6 bis 10 C-Atome (kurz C6-bzw. C10-) aufweisen. Hierbei ist anzumerken, dass in C10- auch Methan (C1), Ethan/Ethylen/Acetylen (C2), Propan/Propylen (C3), sowie C4 und C5 eingeschlossen sind, die in der Wasserwäsche aufgrund des niedrigen Siedepunktes nicht mehr verflüssigt werden und die Kolonne als Produkt über Kopf verlassen.

Weiterhin können leichte Kohlenwasserstoffe Siedepunkte unter 100°C (bis 150°C) aufweisen und werden daher in der Wasserwäsche (z.B. bei einer Kühlwassertemperatur ca. 40°C) verflüssigt und mit ausgewaschen. Nicht mehr verflüssigt werden Kohlenwasserstoffe mit Siedetemperaturen unter 40°C, das sind in der Regel C5-. Diese nicht verflüssigbaren Kohlenwasserstoffe werden unter normalen Bedingungen oft auch oft als leicht flüchtige Kohlenwasserstoffe bezeichnet.

Gegenüber den leichten Kohlenwasserstoffen zeichnen sich die Kokspartikel bzw. schweren Kohlenwasserstoffe dadurch aus, dass sie in der Wasserphase bzw. im Waschmittel absinken und sich schwerkraftbedingt absetzen (oft als zäher Film).

Hierdurch kann mit Vorteil auf einfache Weise über den Trichter wässriges Waschmittel aus dem Sumpf abgezogen werden, das vorwiegend leichte Kohlenwasserstoffe aufweist, wohingegen Koks sowie die schweren Kohlenwasserstoffe (also Kohlenwasserstoffe, die nicht den leichten Kohlenwasserstoffen zugerechnet werden, wie z.B. Teer, Schweröl bzw. ähnliche längerkettige Kohlenwasserstoffe) entlang des Rohrleitungsabschnitts zum Boden der Kolonnen sinken, von wo aus sie separat abziehbar sind.

Die erfindungsgemäße Lösung erlaubt auf einfache Weise ein Nachrüsten bestehender herkömmlicher Waschkolonnen (z.B. nach Art der Figur 1), die in der Regel die notwendigen Stutzen und Einbauten für den Abzug von Koks und Teer etc. aus dem Sumpf der Wasserwäsche nicht aufweisen. Im Wesentlichen muss hierzu lediglich die besagte Strömungsverbindung bereitgestellt werden und ein umfangreicher Umbau der Kolonne, insbesondere des Bodens der Kolonne (vgl. insbesondere Figur 2) kann mit Vorteil entfallen.

Der besagte Schwerkraftabscheider ist bevorzugt als 3-Phasen-Dekanter ausgebildet und weist einen Behälter auf, insbesondere einen liegenden, entlang der Horizontelen erstreckten Behälter, mit einem insbesondere zylindrischen Mantel mit zwei gegenüberliegenden Enden, wobei sich an das Ende jeweils ein insbesondere gewölbter Boden des Behälters anschließt. Mantel und Böden umgeben einen Innenraum des Dekanters, der einen ersten Abschnitt aufweist, der über die Strömungsverbindung mit dem Innenraum bzw. Sumpf der Waschkolonne verbunden ist, so dass das Waschmittel über jene Strömungsverbindung in den ersten Abschnitt des Innenraumes des Behälters einleitbar ist. Dort können sich Koks und schwere Kohlenwasserstoffe, wie z.B. Teer, im unteren Teil des ersten Abschnitts des Innenraumes des Behälters schwerkraftbedingt absetzen. Unterhalb des ersten Abschnitts des Innenraumes des Behälters weist dieser des Weiteren eine Vielzahl an Auslassstutzen auf, über die sich im unteren Teil des ersten Abschnitts des Innenraumes ansammelnder Koks und schwere Kohlenwasserstoffe (wie Teer), die nunmehr hauptsächlich im Sumpf der Kolonne anfallen, ggf. aus dem ersten Abschnitt des Innenraumes abziehbar sind. Weiterhin weist der Behälter unterhalb des ersten Abschnitts des Innenraumes einen Auslassstutzen auf, über den Wasser bzw. das Waschmittel aus einem oberen Teil des ersten Abschnitts des Innenraumes abziehbar ist. Hierzu ist dieser Abzugsstutzen mit einem in den oberen Teil hineinstehenden Fallrohr verbunden.

Der erste Abschnitt des Innenraumes des Behälters des Dekanters ist über ein Wehr von einem zweiten Abschnitt des Innenraumes des Behälters getrennt, wobei das Wehr so beschaffen ist, dass im Waschmittel vorhandene leichte bzw. flüssige Kohlenwasserstoffe über das Wehr in den zweiten Abschnitt des Innenraums des Behälters gelangen können. Von dort können sie über einen weiteren Auslassstutzen abgezogen werden, der an der Unterseite des Behälters unterhalb des zweiten Abschnitts des Innenraumes des Behälters vorgesehen ist.

Gemäß einer Ausführungsform der Erfindung ist vorgesehen, dass am Boden der Waschkolonne ein koaxial zur Längsachse ausgebildeter Abzugsstutzen zum Abziehen von Koks und schweren Kohlenwasserstoffen vorgesehen ist, bei denen es sich z.B. um Teer, Schweröl oder ähnliche längerkettige Kohlenwasserstoffe handeln kann.

Weiterhin ist gemäß einer bevorzugten Ausführungsform der Erfindung vorgesehen, dass am Abzugsstutzen eine Heizeinrichtung zum Beheizen des Abzugsstutzens vorgesehen ist. Dies erleichtert das Abziehen der schweren Kohlenwasserstoffe, die oftmals als zäher Film vorliegen, der sich im Sumpf der Kolonne bzw. an der Wandung des Abzugsstutzens ansammelt.

Weiterhin ist gemäß einer bevorzugten Ausführungsform der Erfindung vorgesehen, dass die Strömungsverbindung durch eine Rohrleitung gebildet ist, die den besagten Rohrleitungsabschnitt aufweist, wobei die Rohrleitung sich ausgehend vom Trichter nach unten hin in den Abzugsstutzen erstreckt. Somit können die schweren Kohlenwasserstoffe über einen Ringspalt zwischen dem Abzugsstutzen und der besagten Rohrleitung abgezogen werden.

Gemäß einer Ausführungsform ist bevorzugt vorgesehen, dass die Rohrleitung bzw. die besagte Strömungsverbindung über eine umlaufende Wandung des Abzugsstutzens lateral aus dem Abzugsstutzen herausgeführt ist und von dort zum Schwerkraftabscheider verläuft. Auf diese Weise kann eine herkömmliche Kolonne modifiziert werden, ohne dass umfangreiche Arbeiten am Boden bzw. am Mantel der Kolonne vorzunehmen sind, was zudem strukturelle Schwächungen der Kolonne vermeidet.

Weiterhin ist gemäß einer Ausführungsform der Erfindung vorgesehen, dass im Sumpf ein konzentrisch zur Längsachse angeordneter Konus vorgesehen ist, z.B. in Form eines Konusblechs, der sich nach oben hin öffnet und nach unten hin mit dem Abzugsstutzen in Strömungsverbindung steht. Dieser Konus erleichtert in vorteilhafter Weise das Abziehen der schweren Kohlenwasserstoffe aus dem Sumpf der Waschkolonne. Dabei verjüngt sich der Konus nach unten hin in Richtung der Längsachse der Kolonne und geht an einem unteren Ende in den insbesondere hohlzylindrisch ausgestalteten Abzugsstutzen über oder ragt in diesen hinein.

Der besagte Rohrleitungsabschnitt mit samt Trichter ist bevorzugt zumindest abschnittsweise in einem vom Konus umgebenden Bereich des Innenraumes der Waschkolonne angeordnet.

Weiterhin ist gemäß einer Ausführungsform der Erfindung vorgesehen, dass der Konus einen oberen umlaufenden Rand aufweist, der mit einer umlaufenden Innenseite des Mantels verbunden ist, z.B. mittels einer Schweißverbindung.

Zum besseren Abziehen von Koks sowie der schweren Kohlenwasserstoffe aus dem Konus bzw. dem Abzugsstutzen ist des Weiteren vorgesehen, dass auch am Konus eine Heizeinrichtung zum Beheizen des Konus vorgesehen ist, wobei diese Heizeinrichtung durch die oben beschriebene Heizeinrichtung des Abzugsstutzens gebildet sein kann, die sich nun auch entlang des besagten Konus erstreckt. Die Heizeinrichtung kann zum Beispiel Heizrohre aufweisen, die Wärme an den Konus bzw. den Abzugsstutzen abgeben, wobei jene Heizrohre zum Beispiel nach Art einer Helix um den Abzugsstutzen bzw. den Konus gewickelt sein können und dabei in einen thermischen Kontakt mit dem Abzugsstutzen bzw. dem Konus stehen. Die Heizeinrichtung kann elektrisch betrieben werden, wobei die Heizrohre als elektrische Leiter ausgebildet sein können (z. B. Widerstandsheizung). Es ist aber auch denkbar, einen fluiden Wärmeträger wie z.B. Dampf durch die Heizrohre zu leiten.

Durch die besagte Heizeinrichtung können insbesondere abzuziehender Teer und Koks leichter in einem zähflüssigen Zustand gehalten bzw. gebracht werden (z.B. nahe 100°C) und haften daher weniger stark am Konus bzw. Abzugsstutzen.

Weiterhin weist die Waschkolonne bevorzugt einen Einlassstutzen für das zu waschende Spaltgas auf, wobei dieser Einlassstutzen gemäß einer Ausführungsform am Mantel oberhalb des Schutzelements (siehe unten) vorgesehen ist.

Weiterhin ist gemäß einer bevorzugten Ausführungsform der vorliegenden Erfindung vorgesehen, dass die Einrichtung ein im Innenraum der Waschkolonne angeordnetes Schutzelement, insbesondere in Form eines Schutzblechs, aufweist, das bevorzugt eben ausgebildet ist sowie oberhalb des Trichters angeordnet ist und diesen überdeckt. Hierbei erstreckt sich das Schutzelement, das vorzugsweise kreisförmig ausgebildet ist, senkrecht zur Längsachse der Kolonne. Bevorzugt ist weiterhin vorgesehen, dass das Schutzelement einen umlaufenden Rand aufweist, der mit einer umlaufenden Innenseite des Mantels einen Ringspalt ausgebildet.

Das besagte Schutzelement bzw. Schutzblech ist gemäß einer Ausführungsform vorzugsweise oberhalb des Flüssigkeitsstandes (bezogen auf einen bestimmungsgemäßen Betriebs der Waschkolonne) im Sumpf der Waschkolonne angeordnet und dabei dazu konfiguriert, zu verhindern, dass das durch den Einlassstutzen zuströmende Spaltgas die Sumpfflüssigkeit bzw. das dort sich ansammelnde beladene Waschmittel aufwirbelt. Hierdurch wird ein kontinuierliches Aufmischen der Sumpfflüssigkeit unterbunden.

Das Schutzelement beruhigt vielmehr die Sumpfflüssigkeit, wodurch sich die Abscheidewirkung von Koks und Teer aus der Sumpfflüssigkeit bzw. aus dem wässrigen Waschmittel stark verbessert. Der besagte Ringspalt ist bevorzugt so bemessen, dass Waschmittel bzw. Wasser, leichte bzw. flüssige Kohlenwasserstoffe, sowie Koks und schwere Kohlenwasserstoffe, wie z.B. Teer und Schweröle, durch den Ringspalt in den Sumpf der Waschkolonne unterhalb des Schutzelementes gelangen. Der Ringspalt ist des Weiteren bezüglich seiner Breite (in radialer Richtung des Mantels bzw. der Waschkolonne) bevorzugt so bemessen, dass Koks- und Teerfeststoffe diesen nicht verschließen können.

Weiterhin ist hinsichtlich des Konus gemäß einer alternativen Ausführungsform der vorliegenden Erfindung vorgesehen, dass der Konus eine umlaufenden oberen Rand aufweist, der beabstandet zu der umlaufenden Innenseite des Mantels angeordnet ist, so dass der oberen Rand des Konus einen Ringspalt mit der Innenseite des Mantels bildet. In dieser Ausführungsform kann der Konus insbesondere steiler verlaufen, so dass insbesondere auf eine Heizung des Konus verzichtet werden kann.

Weiterhin ist gemäß einer Ausführungsform der Erfindung vorgesehen, dass die Waschkolonne bei einem vorhandenen Ringspalt zwischen dem oberen Rand des Konus und der Innenseite des Mantels ein im Innenraum der Waschkolonne angeordnetes Abdeckelement aufweist, insbesondere in Form eines Abdeckblechs, wobei das Abdeckelement von der Innenseite in den Innenraum der Waschkolonne abragt und den Ringspalt überdeckt. Hierdurch wird erreicht, dass die in der Waschkolonne von oben aufgegebene wässrige Phase nicht direkt in einen den Konus umgebenen Bereich des Innenraumes bzw. des Sumpfes der Waschkolonne herein regnen kann. Das Abdeckelement fällt bevorzugt zur Mitte der Kolonne hin ab und kann an einem umlaufenden inneren Rand eine Tropfnase aufweisen.

Die Neigung des Abdeckelementes wird bevorzugt so steil wie möglich ausgeführt, damit die flüssige Phase von oben so schnell wie möglich abfließt und das Ablagern von Koks und Teer auf dem Abdeckelement reduziert wird.

Für den Fall dass zwischen dem oberen Rand des Konus und der Innenseite des Mantels ein Ringspalt vorgesehen ist, ist bevorzugt gemäß einer Ausführungsform der Erfindung vorgesehen, dass der Einlassstutzen für das zu waschende Spaltgas und insbesondere ein Einlassstutzen für die Zuspeisung einer Spülflüssigkeit in den Sumpf der Waschkolonne unterhalb des umlaufenden Abdeckelementes angeordnet sind.

Weiterhin ist gemäß einer Ausführungsform der Erfindung vorgesehen, dass die Einrichtung ein im Innenraum der Waschkolonne angeordnetes umlaufendes Schutzelement aufweist, insbesondere in Form eines Schutzblechs, wobei das Schutzelement dem Einlassstutzen für die Zuspeisung des Spaltgases gegenüberliegt und gleichzeitig den oberen Randabschnitt bzw. oberen Rand des Konus umgibt und dabei insbesondere in dem besagten Ringspalt zwischen dem oberen Rand des Konus und der Innenseite des Mantels angeordnet ist.

Das Schutzelement bzw. Schutzblech sorgt dafür, dass die Kondensation von Kohlenwasserstoffen aus dem über den Einlassstutzen in den Innenraum der Waschkolonne eingeleiteten Spaltgasstrom gering gehalten wird.

Das Schutzelement ist bevorzugt ebenfalls konusförmig ausgeformt, so dass ein konstanter Abstand zwischen dem Schutzelement und einem oberen Randbereich des Konus vorliegt. Der Abstand, der z.B. 50mm bis 150mm betragen kann, bewirkt eine thermische Trennung des kühleren Konus zum Schutzelement. Dadurch hat das Schutzelement eine ähnliche Temperatur wie das einströmende Spaltgas und die Kondensation von Kohlenwasserstoffen ist gering.

Im Bereich zwischen der Innenseite der Waschkolonne und dem Konus können sich Kondensate aus dem Spaltgasstrom niederschlagen. Diese können mit Hilfe einer Spülflüssigkeit, die über den oben beschriebenen Einlassstutzen in den besagten Bereich des Sumpfes einleitbar ist, abgelöst werden. Die Spülflüssigkeit kann aus Wasser und/oder Kohlenwasserstoffen bestehen und kann des Weiteren über eine Abzugsleitung mit Ventil kontinuierlich oder stoßweise in den Schwerkraftabscheider gefahren werden. Die Abzugsleitung geht bevorzugt außerhalb des Konus vom Boden der Waschkolonne ab und verbindet den Sumpfbereich außerhalb des Konus mit dem Schwerkraftabscheider. Hierbei ist die Abzugsleitung bevorzugt mittels eines Ventils absperrbar.

Der Vorteil der Ausführungsform mit dem Ringspalt zwischen dem oberen Rand des Konus und der Innenseite des Mantels der Waschkolonne liegt darin, dass diese insbesondere für sehr kleine Abstände des Einlassstutzens für das Spaltgas zur Tangentenlinie (TL=0) des Mantels (Übergang vom Mantel zum Boden der Kolonne) anwendbar ist.

Die oben beschriebenen Konusse weisen bevorzugt einen Anstellstellwinkel auf, der zwischen 60° und 80° zur Horizontalen liegt. Hierdurch wird ein gutes Ablaufverhalten von Koks und Teer ermöglicht. Aus dem Kolonnendurchmesser und der Höhe des gewölbten Bodens ergibt sich daher ein notwendiger Abstand des Spaltgas-Einlassstutzens zur Tangentenlinie. Ist dieser Abstand nicht vorhanden, wird bevorzugt die Konusvariante mit Ringspalt zwischen dem oberen Konusrand und der Innenseite des Mantels gewählt.

Weiterhin ist bevorzugt im Innenraum der Waschkolonne bzw. in einem von dem Konus umgebenen Bereich des Innenraumes der Waschkolonne eine Abdeckhaube angeordnet, die den besagten Trichter überdeckt, so dass die abregnende Flüssigkeit mit dem Koks und Teer vorrangig zu dem Abzugsstutzen für Koks und Teer geführt wird.

Ein weiterer Aspekt der vorliegenden Erfindung betrifft ein Verfahren zum Betreiben einer erfindungsgemäßen Einrichtung.

Danach ist vorgesehen, dass ein Spaltgasstrom in den Innenraum der Kolonne eingeleitet wird und im Gegenstrom mit einem wässrigen Waschmittel beaufschlagt wird, wobei wässriges Waschmittel, das leichte Kohlenwasserstoffe aufweist, über den Trichter aus dem Sumpf der Kolonne in den Schwerkraftabscheider geführt wird, wo leichte Kohlenwasserstoffe aus dem wässrigen Waschmittel abgetrennt werden, und wobei bevorzugt Koks und schwere Kohlenwasserstoffe über den Konus und den Abzugsstutzen aus dem Sumpf der Waschkolonne abgezogen werden.

Gemäß einer Variante des Verfahrens kann vorgesehen sein, dass eine Spülflüssigkeit in den Bereich zwischen dem Konus und der Innenseite des Mantels eingeleitet wird um dort vorhandene Kohlenwasserstoffe aus dem Sumpf zu spülen. Hierzu kann die beladene Spülflüssigkeit in den Schwerkraftabscheider über die besagte Abzugsleitung in den Schwerkraftabscheider eingeleitet werden (siehe auch oben).

Des Weiteren kann der Konus und/oder der Abzugsstutzen beheizt werden, um das Abziehen von Koks und schwereren Kohlenwasserstoffen (wie z.B. Teer) über den Konus bzw. den Abzugsstutzen zu erleichtern (siehe auch oben).

Weiterhin betrifft die Erfindung ein Verfahren zur Nachrüstung einer Kolonne mit einer Rohrleitung zum Abziehen von leichten Kohlenwasserstoffen aus dem Sumpf der Kolonne.

Hierbei wird bevorzugt gemäß einer Ausführungsform des Verfahrens ein Konus, insbesondere in Form eines Konusblechs, im Sumpf der Waschkolonne angeordnet und in Strömungsverbindung mit einem Abzugsstutzen gebracht, der koaxial zur Längsachse der Waschkolonne bzw. zu einem Mantel der Waschkolonne nach unten hin von einem Boden der Waschkolonne abgeht, wobei Boden und Mantel den besagten Sumpf der Waschkolonne begrenzen bzw. umgeben.

Wie bereits dargelegt, weist der Konus ein konstantes Gefälle auf (im Gegensatz zu einem Korbboden), wodurch sich Koks und Teer nicht oder nur schwer am Konus ablagern können. Der Konus bzw. das Konusblech ist am unteren Ende bevorzugt so beschaffen, dass es in den Abzugsstutzen hineinragt.

Der Konus und/oder der Abzugsstutzen können des Weiteren gemäß einer Ausführungsform des Verfahrens mit einer Heizeinrichtung (siehe oben) ausgestattet werden. Diese Heizeinrichtung ist besonders dann von Vorteil, wenn beim Umbau die Höhe des Kolonnensumpfes relativ klein ist, so dass die Fläche, auf der Rückstände (Koks, Teer etc.) fließen sollen, zu flach sein kann (siehe auch oben).

Weiterhin wird bevorzugt gemäß einer Ausführungsform des Verfahrens der vormalige Abzugsstutzen der Kolonne geöffnet und der Rohrbogen (vgl. Figur 1) entfernt. Der Abzugsstutzen kann zu einem gesonderten Koks-Schwerkraftabscheider geführt werden.

Weiterhin wird gemäß einer Ausführungsform des Verfahrens in dem Sumpf der Waschkolonne bevorzugt eine Rohrleitung angeordnet, die zum Abziehen des wässrigen Waschmittels aus dem Sumpf dient, das mit leichten bzw. flüssigen Kohlenwasserstoffen beladen ist.

Diese Rohrleitung weist bevorzugt einen Rohrleitungsabschnitt mit einem Trichter auf, wobei der Rohrleitungsabschnitt bevorzugt koaxial zum Abzugsstutzen im Abzugsstutzen angeordnet wird. Hierbei wird der Trichter innerhalb des Sumpfes angeordnet und weist in Richtung der Längsachse der Kolonne nach oben.

Die Position des Trichters orientiert sich dabei bevorzugt am Flüssigkeitsstand im Sumpf der Waschkolonne, so dass das wässrige Waschmittel bzw. Wasser und flüssige Kohlenwasserstoffe am Trichter in die Rohrleitung überlaufen und so in den Schwerkraftabscheider bzw. 3-Phasen-Dekanter gelangen. Nur noch ein sehr kleiner Anteil an Koks und Teer werden am Überlauf dem Schwerkraftabscheider zugeführt.

Durch die koaxiale Anordnung des Rohrleitungsabschnitts bezüglich des Abzugsstutzens am Boden der Waschkolonne muss mit Vorteil kein neuer Stutzen im Sumpf der Waschkolonne vorgesehen werden, wodurch sich der Aufwand der Modifikation verringert. In der Regel ist der vorhandene Sumpfstutzen derart groß dimensioniert (wegen Abzugs vergleichbarer Mengen an Koks, Teer, wässriger Phase und flüssigen Kohlenwasserstoffen), dass eine konzentrische bzw. koaxiale Anordnung des besagten Rohrleitungsabschnitts zum Schwerkraftabscheider im bereits vorhandenen Abzugsstutzen möglich ist.

Insbesondere für den Fall, dass der obere Rand des Konus mit der Innenseite des Mantels verbunden wird, ist bevorzugt gemäß einer Ausführungsform des Verfahrens vorgesehen, dass ein Schutzelement, insbesondere Schutzblech, oberhalb des Flüssigkeitsstandes bzw. oberhalb des Trichters im Sumpf der Waschkolonne festgelegt wird, das verhindert, dass das zuströmende Spaltgas die Sumpfflüssigkeit aufwirbelt (siehe oben).

Es ist auch möglich (siehe oben) auf die Begleitheizung des Konus zu verzichten, da der Konus gemäß einer Ausführungsform auch durch das einströmende und heiße Spaltgas heizbar ist, wenn der Konus dem Einlassstutzen für das Spaltgas in der Horizontalen gegenüberliegt.

Hier wird bevorzugt gemäß einer Ausführungsform des Verfahrens ein Abdeckelement, insbesondere Abdeckblech, insbesondere mit einer Tropfnase (siehe oben) oberhalb des Konus angeordnet. Das Abdeckelement sorgt dafür, dass die gesamte, vom aktiven Teil der Kolonne abregnende Flüssigkeit in den Konusbereich gelangt und nicht in den Ringspalt zwischen dem Konus und der Innenseite des Mantels der Kolonne (siehe oben).

Der Trichter, mit dem das wässrige Waschmittel abgeführt wird, kann so hoch wie möglich positioniert werden, bis nahe an den Gasdurchtrittsspalt bzw. den oberen Rand des Konus. Dadurch wir die auf die Flüssigkeitsoberfläche eingetragene Energie reduziert.

Oberhalb des Trichters wird des Weiteren gemäß einer Ausführungsform des Verfahrens bevorzugt eine Abdeckhaube angeordnet, die die nach oben weisende Trichteröffnung abschirmt, so dass die abregnende Flüssigkeit mit dem Koks und Teer vorrangig am Trichter vorbei zu dem Abzugsstutzen für Koks und Teer geführt wird.

Weiterhin wird bevorzugt gemäß einer Ausführungsform des Verfahrens ein Schutzelement, insbesondere Schutzblech, am Konus angeordnet, so dass dieses einen oberen Randbereich des Konus umläuft (siehe oben).

Schließlich kann eine Abzugsleitung, insbesondere mit Ventil, vorgesehen werden, über die Kondensate aus dem Spaltgasstrom, die sich im Bereich zwischen der Innenseite des Mantels und dem Konus niederschlagen, abgezogen werden können (siehe oben).

Im Hinblick auf das Abziehen der wässrigen Phase bzw. des Waschmittels zusammen mit darin befindlichen leichten bzw. flüssigen Kohlenwasserstoffen ist auch denkbar, diese Phase über den Abzugsstutzen abzuziehen, also über den Ringspalt zwischen dem besagten Rohrleitungsabschnitt mit Trichter und dem umgebenden Abzugsstutzen, wobei nunmehr über die Rohrleitung Koks, Teer bzw. schwerere Kohlenwasserstoffe abgezogen werden. Dies kann insbesondere bei Kolonnen vorgenommen werden, die über dem Trennkessel bzw. Schwerkraftabscheider angeordnet sind.

Weitere Merkmale der Erfindung werden nachfolgend durch Beschreibung eines Ausführungsbeispiels anhand der Figuren erläutert. Es zeigen:
- Fig. 1: eine Waschkolonne mit Schwerkraftabscheider aus dem Stand der Technik;
- Fig. 2: eine weitere Waschkolonne mit Schwerkraftabscheider aus dem Stand der Technik;
- Fig. 3: eine Ausführungsform einer erfindungsgemäßen Einrichtung ; und
- Fig. 4: eine weitere Ausführungsform einer erfindungsgemäßen Einrichtung.

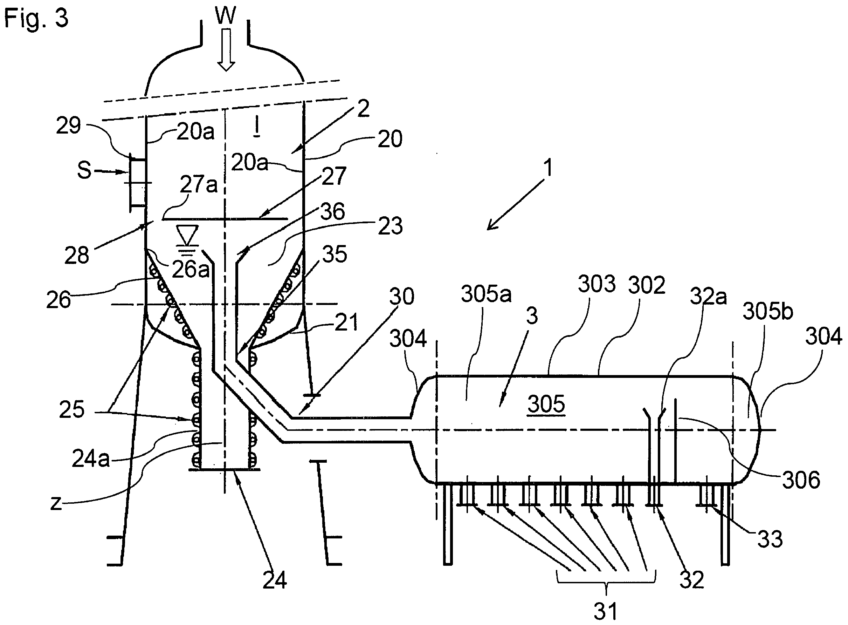

Die Figur 3 zeigt eine Ausführungsform einer erfindungsgemäßen Einrichtung 1, aufweisend eine Waschkolonne 2 zum Waschen eines Spaltgases S, das z.B. im Rahmen einer Oflefinherstellung, insbesondere Ethylenherstellung, erzeugt worden ist, mit einem wässrigen Waschmittel W, vorliegend z. B. Wasser, sowie einen Schwerkraftabscheider 3 zum Abtrennen von Kohlenwasserstoffen aus dem wässrigen Waschmittel W.

Die Waschkolonne 2 weist dabei einen umlaufenden Mantel 20 auf, der einen innenraum I der Waschkolonne 2 umgibt und sich entlang einer Längsachse z erstreckt, die hier mit der Vertikalen zusammenfällt, sowie einen nach unten hin sich an den Mantel 20 anschließenden Boden 21, wobei ein unterster Abschnitt des Mantels 20 zusammen mit dem Boden 21 einen Sumpf 23 der Waschkolonne 2 umgibt.

Zwischen dem Sumpf 23 und dem Schwerkraftabscheider 3 ist eine Strömungsverbindung 30 vorgesehen, über die das Waschmittel W und darin befindliche leichte Kohlenwasserstoffe aus dem Sumpf 23 der Waschkolonne 2 in den Schwerkraftabscheider 3 abziehbar sind.

Erfindungsgemäß ist nun vorgesehen, dass die Strömungsverbindung 30 einen im Sumpf 23 koaxial zur Längsachse z angeordneten Rohrleitungsabschnitt 35 mit einem nach oben hin geöffneten Trichter 36 aufweist. D.h., die Öffnung des Trichters 32 ist in Richtung der Längsachse z dem Kopf der Waschkolonne 2 zugewandt, wobei die Öffnungsebene der Trichteröffnung in einer senkrecht zur Längsachse z erstreckten Querschnittsebene der Kolonne 2 liegt.

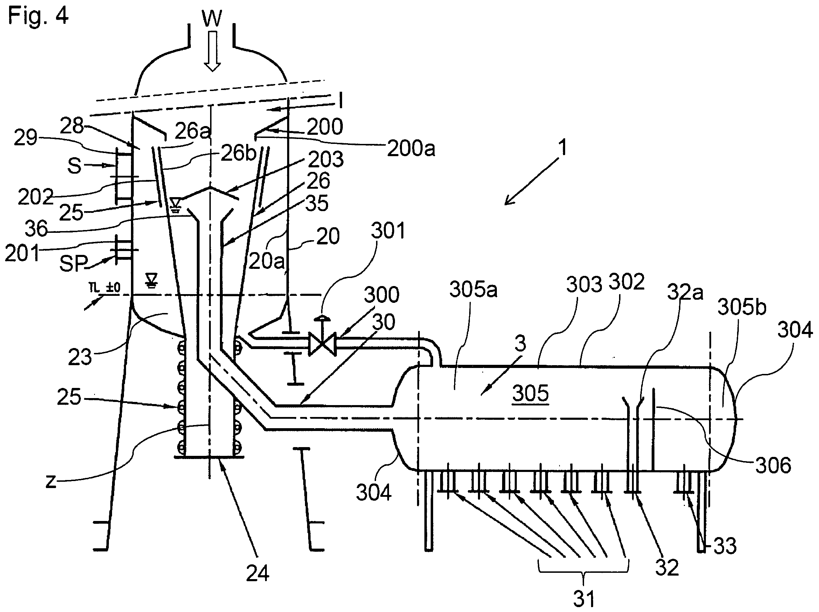

Weiterhin ist der besagte Schwerkraftabscheider 3 gemäß einer in der Fig. 3 bzw. Fig. 4 gezeigten Ausführungsform als ein 3-Phasen-Dekanter ausgebildet und weist einen liegenden, entlang der Horizontalen erstreckten Behälter 302 auf, mit einem insbesondere zylindrischen Mantel 303 mit zwei gegenüberliegenden Enden, wobei sich an die Enden jeweils ein insbesondere gewölbter Boden 304 des Behälters 302 anschließt. Der Mantel 303 und die Böden 304 umgeben einen Innenraum 305 des Dekanters 3, der einen ersten Abschnitt 305a aufweist, der über die Strömungsverbindung 30 mit dem Innenraum I bzw. Sumpf 23 der Waschkolonne 2 verbunden ist, so dass das Waschmittel W über jene Strömungsverbindung 30 in den ersten Abschnitt 305a des Innenraumes 305 des Behälters 302 einleitbar ist. Dort können sich Koks und schwere Kohlenwasserstoffe, wie z.B. Teer, im unteren Teil des ersten Abschnitts 305a des Innenraumes 305 des Behälters 302 schwerkraftbedingt absetzen. Unterhalb des ersten Abschnitts 305a des Innenraumes 305 des Behälters 302 weist dieser des Weiteren eine Vielzahl an Auslassstutzen 31 auf, über die sich im unteren Teil des ersten Abschnitts 305a des Innenraumes 305 ansammelnder Koks und schwere Kohlenwasserstoffe (wie z. B. Teer), die nunmehr hauptsächlich im Sumpf 23 der Kolonne 2 anfallen, ggf. aus dem ersten Abschnitt 305a des Innenraumes 305a abziehbar sind. Weiterhin weist der Behälter 302 unterhalb des ersten Abschnitts 305a des Innenraumes 305 einen Auslassstutzen 32 auf, über den Wasser bzw. das Waschmittel W aus einem oberen Teil des ersten Abschnitts 305a des Innenraumes 305 abziehbar ist. Hierzu ist dieser Abzugsstutzen 32 mit einem in den oberen Teil des ersten Abschnitts 305a des Innenraumes 305 hinein stehenden Fallrohr 32a verbunden.

Der erste Abschnitt 305a des Innenraumes 305 des Behälters 302 des Dekanters 3 ist über ein Wehr 306 von einem zweiten Abschnitt 305b des Innenraumes 305 des Behälters 302 getrennt, wobei das Wehr 306 so beschaffen ist, dass im Waschmittel W vorhandene leichte bzw. flüssige Kohlenwasserstoffe über das Wehr 306 in den zweiten Abschnitt 305b des Innenraums 305 des Behälters 302 gelangen können. Von dort können sie über einen weiteren Auslassstutzen 33 abgezogen werden, der an der Unterseite des Behälters 302 unterhalb des zweiten Abschnitts 305b des Innenraumes 305 des Behälters 302 vorgesehen ist.

Wie der Figur 3 weiterhin zu entnehmen ist, ist am Boden 21 der Waschkolonne 2 ein koaxial zur Längsachse z ausgebildeter Abzugsstutzen 24 zum Abziehen von Koks und/oder schweren Kohlenwasserstoffen aus dem Sumpf 23 der Kolonne 2 vorgesehen. Hierbei kann am Abzugsstutzen 24 eine Heizeinrichtung 25 zum Beheizen des Abzugsstutzens 24 vorgesehen sein, die den Stutzen 24 z. B. umgreifen kann. Hierzu kann eine Leitung um den Stutzen 24 gewickelt sein, die z.B. einen elektrischen Strom führen und den Abzugsstutzen 24 elektrisch heizen kann (Widerstandsheizung). Alternativ kann z. B. ein Wärmeträger in einer um den Abzugsstutzen 24 gewickelten Leitung geführt werden, der seine Wärme an den Abzugsstutzen 24 abgibt.

Die besagte Strömungsverbindung 30 wird bevorzugt durch eine Rohrleitung 30 gebildet, die den besagten vertikal sowie koaxial zur Längsachse z erstreckten Rohrleitungsabschnitt 35 aufweist, der nach oben hin mit dem nach oben geöffneten Trichter 36 endet und der nach unten hin mittig in den Abzugsstutzen 24 eintritt und mit einem weiteren Rohrleitungsabschnitt der Rohrleitung 30 verbunden ist, der über eine umlaufende Wandung 24a des Abzugsstutzens 24 lateral aus dem Abzugsstutzen 24 herausgeführt ist und von dort entlang der Horizontalen zu dem Schwerkraftabscheider 3 verläuft, wobei die besagte Rohrleitung 30 vorzugsweise über den einen Boden 304 des Behälters 302 in den Behälter 302 einmündet.

Über den Trichter 36 bzw. die Rohrleitung 30 wird das mehrheitlich mit leichten bzw. flüssigen Kohlenwasserstoffen beladenen Waschmittel W aus dem Sumpf 23 der Kolonne 2 abgezogen. Der Koks bzw. die schwereren Kohlenwasserstoffe, wie z.B. Teer, sammeln sich insbesondere als zähe Masse im unteren Teil des Sumpfes 23. Um diese Verunreinigungen des Waschwassers W möglichst leicht aus dem Sumpf 23 abziehen zu können - der Sumpf 23 wird hier ebenfalls als Schwerkraftabscheider genutzt - ist im Sumpf 23 des Weiteren gemäß einer Ausführungsform bevorzugt ein koaxial zur Längsachse z angeordneter Konus 26 vorgesehen, der sich nach oben hin öffnet und nach unten hin mit dem Abzugsstutzen 24 in Strömungsverbindung steht. Hierzu kann der Konus 26 z.B. mit einem unteren Abschnitt in den Abzugsstutzen 24 hinein stehen oder kann in einer sonstigen Weise in diesen übergehen. Der Rohrleitungsabschnitt 35 mit Trichter 36 ist dabei koaxial zum Konus 26 bzw. zur Längsachse z in einem vom Konus 26 umgebenden Bereich des Innenraumes I der Waschkolonne 2 angeordnet.

Weiterhin weist der Konus 26 einen oberen umlaufenden Rand 26a auf, der gemäß der in der Figur 3 gezeigten Ausführungsform mit einer umlaufenden Innenseite 20a des Mantels 20 verbunden ist, z.B. mittels einer Schweißverbindung.

Weiterhin kann die am Abzugsstutzen 24 vorgesehene Heizeinrichtung 25 auch dazu konfiguriert sein, den Konus 26 zu beheizen. Hierbei können z.B. die oben beschriebenen Leitungen auch um den Konus 26 gewickelt sein.

Weiterhin weist die Einrichtung 1 gemäß Figur 3 zum Schutz des im Sumpf 23 stehenden Waschmittels W vor einer z.B. durch das Spaltgas S verursachten Aufwirbelung ein im Innenraum I der Waschkolonne 2 angeordnetes Schutzelement 27, insbesondere in Form eines Schutzbleches, auf. Das Schutzelement 27 kann z.B. flächig kreisförmig ausgebildet sein und ist oberhalb des Trichters 36 im Innenraum I der Kolonne 2 angeordnet und überdeckt die Trichteröffnung. Dabei weist das Schutzelement 27 einen äußeren umlaufenden Rand 27a auf, der mit einer umlaufenden Innenseite 20a des Mantels 20 einen Ringspalt 28 ausbildet. Über diesen Ringspalt kann das wässrige Waschmittel W zusammen mit den Verunreinigungen in den Sumpf 23 der Kolonne 2 absinken. Ein Einlassstutzen 29 zum Einlassen des zu waschenden Spaltgases S ist in Richtung der Längsachse z oberhalb des Schutzelementes 27 lateral am Mantel 20 vorgesehen, so dass das Spaltgas S im Wesentlichen senkrecht zur Längsachse z in den Innenraum I der Kolonne 2 eingeleitet wird, wobei das Schutzelement 27 die besagte Aufwirbelung der Sumpfflüssigkeit verhindert.

Zum Quenchen bzw. Waschen des Spaltgases S in der Waschkolonne 2 wird dieses über den besagten Einlassstutzen 29 oberhalb des Sumpfes 23 in den Innenraum I der Waschkolonne 2 eingeleitet und wird hiernach im Gegenstrom mit einem wässrigen Waschmittel W, z.B. Wasser, beaufschlagt, das z. B. über Kopf in die Kolonne 2 eingeleitet wird. Dabei werden Verunreinigungen wie z.B. Koks, schwere Kohlenwasserstoffe (z. B. Teer) und leichte, insbesondere flüssige Kohlenwasserstoffe, aus dem Spaltgas herausgewaschen und sammeln sich im Sumpf 23 der Kolonne zusammen mit dem Waschmittel W. Über den Trichter 36 wird die wässrige Phase W zusammen mit den leichten bzw. flüssigen Kohlenwasserstoffen aus dem Sumpf 23 abgezogen und im Schwerkraftabscheider 3 von der wässrige Phase W getrennt. Etwaige noch im Waschmittel W vorhandene schwere Kohlenwasserstoffe und Kokspartikel können ebenfalls im Schwerkraftabscheider 3 vom Waschmittel W getrennt werden. Diese sinken nämlich im ersten Abschnitt 305a des Innenraumes 305 des Behälters 302 ab und können über die Stutzen 31 abgezogen werden (siehe oben), wohingegen die leichten bzw. flüssigen Kohlenwasserstoffe das Wehr 306 überwinden und aus dem zweiten Abschnitt 305b des Innenraumes 305 des Behälters aus dem Abscheider 3 über den Stutzen 33 abgezogen werden können (siehe oben). Die wässrige Phase W kann über das Fallrohr 32a sowie den Stutzen 32 aus dem Dekanter 3 abgezogen werden (siehe oben) und kann anschließend in der Kolonne 2 als Waschmittel W wiederverwendet werden.

Die Kokspartikel und schwerere Kohlenwasserstoffe (insbesondere Teer) werden über den Konus 26 sowie den Abzugsstutzen 24 aus dem Sumpf 23 abgezogen. Hierbei verhindert die Heizeinrichtung 25 ein übermäßiges Anhaften der Verunreinigungen am Konus 26 bzw. Abzugsstutzen 24.

Die in der Figur 3 gezeigte Ausführungsform kann insbesondere zur Umrüstung von herkömmlichen Waschkolonnen 2 verwendet werden, wenn diese einen ausreichenden Abstand zwischen dem Abzugsstutzen 29 und dem Boden 21 der Kolonne 2 aufweisen, so dass ein Konus 26 mit hinreichender Steigung im Sumpf 23 anordenbar ist (siehe auch oben).

Die Figur 4 zeigt eine weitere erfindungsgemäße Einrichtung 1. Dieser Aufbau kann insbesondere zur Umrüstung bestehender Kolonnen verwendet werden, die einen verhältnismäßig kleinen Abstand zwischen dem Einlassstutzen 29 für das Spaltgas S und den Kolonnenboden 21 aufweisen. Auch hier steht die Kolonne 2 über eine Strömungsverbindung bzw. Rohrleitung 30 mit einem Schwerkraftabscheider 3 nach Art der Figur 3 in Strömungsverbindung.

Im Unterschied zu der Ausführungsform gemäß Figur 3 ist hier vorgesehen, dass der Konus 26 einen umlaufenden oberen Rand 26a aufweist, der beabstandet zu der umlaufenden Innenseite 20a des Mantels 20 angeordnet ist, so dass der oberen Rand 26a einen Ringspalt 28 mit der Innenseite 20a bildet.

Der Konus 26 liegt nun dem Einlassstutzen 29 senkrecht zur Längsachse z gegenüber, wobei nunmehr das Spaltgas S über den Ringspalt 28 am Konus 26 vorbei nach oben im Innenraum I der Kolonne 2 aufsteigen kann.

Damit das Waschmittel W nicht direkt am Konus 26 vorbei in den Sumpf 23 regnen kann, weist die Einrichtung 1 gemäß Fig. 4 ein im Innenraum I der Waschkolonne 2 angeordnetes umlaufendes Abdeckelement 200 auf, insbesondere in Form eines Abdeckblechs, wobei das Abdeckelement 200 von der Innenseite 20a des Mantels 20 der Waschkolonne 2 in den Innenraum I der Waschkolonne 2 absteht und dabei den Ringspalt 28 überdeckt. Dabei fällt das Abdeckelement 200 zur Mitte bzw. in Richtung auf den Konus 26 hin ab und weist dabei an einem inneren umlaufenden Rand eine Tropfnase 200a auf, so dass Verunreinigungen des Waschmittels W vom Abdeckelement 200 in den Konus 26 abfließen können.

Der besagte Einlassstutzen 29 für das Spaltgas S ist bezogen auf die Längsachse z unterhalb des Abdeckelementes 200 lateral am Mantel 20 vorgesehen. Weiterhin ist unterhalb des Einlassstutzens 29 ein weiterer Einlassstutzen 201 für die Zuspeisung einer Spülflüssigkeit SP in den Sumpf 23 (außerhalb des Konus 26) am Mantel 20 angeordnet.

Weiterhin weist die Einrichtung 1 ein im Sumpf 23 der Waschkolonne 2 angeordnetes umlaufendes Schutzelement 202 auf, insbesondere in Form eines Schutzbleches, wobei das Schutzelement 202 einen oberen Randabschnitt 26b des Konus 26 umgibt und dabei senkrecht zur Längsachse z dem Einlassstutzen 29 für das Spaltgas S gegenüberliegt. Das Schutzelement 202 ist vorzugsweise ebenfalls konusförmig ausgeformt, so dass ein konstanter Abstand (z.B. 50mm bis 150mm) zwischen dem Schutzelement 202 und dem oberen Randbereich 26b des Konus 26 vorliegt. Dieser Abstand zwischen dem Schutzelement 202 und dem Konus 26 bewirkt eine thermische Trennung des kühleren Konus 26 vom Schutzelement 202. Dadurch hat das Schutzelement 202 eine ähnliche Temperatur wie das einströmende Spaltgas S und die Kondensation von Kohlenwasserstoffen ist gering.

Weiterhin wird der Trichter 36 der Rohrleitung 30, die nach Art der Figur 3 ausgebildet ist, von einer innerhalb des Konus 26 angeordneten Abdeckhaube 203 überdeckt, so dass Kokspartikel sowie schwere Kohlenwasserstoffe (z.B. Teer) nicht direkt in die Rohrleitung 30 gelangen, sondern daran vorbei im Konus 26 nach unten sinken können.

In der Ausführungsform gemäß Figur 4 ist weist der Sumpf 23 auch einen Bereich außerhalb des Konus 26 auf, der nach innen hin vom Konus 26 und nach außen hin von der Innenseite 20a des Mantels 20 begrenzt wird. Auch in diesem Bereich können sich Verunreinigungen sammeln. Daher weist die Kolonne 2 eine außerhalb des Konus 26 vom Boden 21 abgehende Abzugsleitung 300 auf, die mittels eines Ventils 301 absperrbar ist und mit dem Behälter 302 des Schwerkraftabscheiders 3 in Strömungsverbindung steht, wobei die Abzugsleitung 300 oberhalb der Rohrleitung 30 in den Innenraum 305 des Behälters 302 des Scherkraftabscheiders 3 einmündet.

Über die Abzugsleitung 300 kann die Spülflüssigkeit SP, die über den Einlassstutzen 201 in den Sumpfbereich eingelassen wird, der den Konus 26 umgibt, wieder aus dem Sumpfbereich abgelassen werden, wobei abgelöste Verunreinigungen abgezogen werden und in den Innenraum 305 des Behälters 302 des Dekanters 3 gespült werden.

Wie zuvor bei der Einrichtung 1 gemäß Fig. 3 wird auch bei der Einrichtung 1 gemäß Fig. 4 das Spaltgas S zum Quenchen bzw. Waschen des Spaltgases S über den Einlassstutzen 29 in den Innenraum I bzw. Sumpf 23 der Kolonne 2 eingeleitet, wobei der Konus 26 durch das Schutzelement 202 vom Spaltgasstrom S abgeschirmt wird. Das Spaltgas S gelangt anschließend über den Ringspalt 28 am Abdeckelement 200 vorbei nach oben in den oberhalb des Konus 26 gelegenen Teil des Innenraumes I der Kolonne 2, wo das Spaltgas S mit dem Waschmittel W im Gegenstrom beaufschlagt wird, das am Kopf in die Kolonne 2 gegeben wird.

Wie zuvor im Zusammenhang mit Figur 3 beschrieben, wird das wässrige Waschmittel W mit den vorwiegend leichten bzw. flüssigen Kohlenwasserstoffen über den Trichter 36 und die Rohrleitung 30 aus dem Sumpf 23 in den Schwerkraftabscheider 3 geführt. Dort werden die Kohlenwasserstoffe vom Waschmittel W getrennt (wie oben im Zusammenhang mit Figur 3 beschrieben). Die Kokspartikel bzw. die schwereren Kohlenwasserstoffe werden vorwiegend über den Konus 26 und den Abzugsstutzen 24 aus der Kolonne 2 abgezogen. Hierbei weist der Abzugsstutzen 24 vorzugsweise eine Heizeinrichtung 25 auf, um einem Anhaften der abzuziehenden Verunreinigungen am Abzugsstutzen 24 entgegen zu wirken. Aufgrund der Bauweise gemäß Figur 4 kann der Konus 26 hinreichend steil ausgestaltet werden, so dass eine Beheizung des Konus 26 entfallen kann.

Die Waschkolonne 2 und der Schwerkraftabscheider 3 gemäß Fig. 3 bzw. Fig. 4 sind des Weiteren so zueinander angeordnet bzw. aufgeständert, dass der Behälter 302 bezogen auf die Längsachse z der Kolonne 2 seitlich unterhalb des Bodens 21 der Kolonne 2 angeordnet ist.

**Bezugszeichen**

| | |
|---|---|
| 1 | Einrichtung |
| 2 | Waschkolonne |
| 3 | Schwerkraftabscheider |
| 20 | Mantel |
| 20a | Innenseite |
| 21 | Boden |
| 23 | Sumpf |
| 24 | Abzugsstutzen |
| 24a | Wandung |
| 25 | Heizeinrichtung |
| 26 | Konus |
| 26a | Oberer Rand |
| 26b | Oberer Randbereich |
| 27, 202 | Schutzelement |
| 28 | Ringspalt |
| 29, 201 | Einlassstutzen |
| 30 | Strömungsverbindung |
| 31, 32, 33 | Stutzen |
| 35 | Rohrleitungsabschnitt |
| 36 | Trichter |
| 200 | Abdeckelement |
| 200a | Tropfnase |
| 203 | Abdeckhaube |
| 300 | Abzugsleitung |
| 301 | Ventil |
| 302 | Behälter |
| 304 | Boden |
| 305 | Innenraum |
| 305a, 305b | Abschnitte |
| 306 | Wehr |
| W | Waschmittel |
| S | Spaltgasstrom |
| SP | Spülflüssigkeit |

## Patentansprüche

1. Einrichtung (1), die eine Waschkolonne (2) zum Waschen eines Spaltgases (S) mit einem wässrigen Waschmittel (W) sowie einen Schwerkraftabscheider (3) zum Abtrennen von Kohlenwasserstoffen aus dem wässrigen Waschmittel (W) aufweist, wobei die Waschkolonne (2) einen umlaufenden Mantel (20) aufweist, der einen Innenraum (I) der Waschkolonne (2) umgibt und sich entlang einer Längsachse (z) erstreckt, sowie einen nach unten hin sich an den Mantel (20) anschließenden Boden (21), wobei ein unterster Abschnitt des Mantels (20) zusammen mit dem Boden (21) einen Sumpf (23) der Waschkolonne umgibt, und wobei eine Strömungsverbindung (30) den Sumpf (23) der Waschkolonne (2) mit dem Schwerkraftabscheider (3) verbindet, so dass das Waschmittel (W) und darin befindliche leichte Kohlenwasserstoffe über die Strömungsverbindung aus dem Sumpf (23) der Waschkolonne (2) in den Schwerkraftabscheider (3) abziehbar sind,
**dadurch gekennzeichnet,**
**dass** die Strömungsverbindung (30) einen im Sumpf (23) koaxial zur Längsachse (z) angeordneten Rohrleitungsabschnitt (35) mit einem nach oben hin geöffneten Trichter (36) aufweist.

2. Einrichtung nach Anspruch 1, **dadurch gekennzeichnet, dass** am Boden (21) der Waschkolonne (2) ein koaxial zur Längsachse (z) ausgebildeter Abzugsstutzen (24) zum Abziehen von Koks und/oder schweren Kohlenwasserstoffen vorgesehen ist.

3. Einrichtung nach Anspruch 1 oder 2, **dadurch gekennzeichnet, dass** am Abzugsstutzen (24) eine Heizeinrichtung (25) zum Beheizen des Abzugsstutzens (24) vorgesehen ist.

4. Einrichtung nach einem der vorhergehenden Ansprüche, **dadurch gekennzeichnet, dass** die Strömungsverbindung (30) durch eine Rohrleitung gebildet ist, die den besagten Rohrleitungsabschnitt (35) aufweist, wobei die Rohrleitung (30) sich ausgehend vom Trichter (36) nach unten hin in den Abzugsstutzen (24) erstreckt.

5. Einrichtung nach Anspruch 2 oder 4, **dadurch gekennzeichnet, dass** die Rohrleitung (30) oder die Strömungsverbindung (30) über eine umlaufende Wandung (24a) des Abzugsstutzens (24) lateral aus dem Abzugsstutzen (24) herausgeführt ist und von dort zum Schwerkraftabscheider (3) verläuft.

6. Einrichtung nach einem der vorhergehenden Ansprüche, **dadurch gekennzeichnet, dass** im Sumpf (23) ein koaxial zur Längsachse (z) angeordneter Konus (26) vorgesehen ist, der sich nach oben hin öffnet und nach unten hin mit dem Abzugsstutzen (24) in Strömungsverbindung steht, wobei insbesondere der besagte Rohrleitungsabschnitt (35) zumindest abschnittsweise in einem vom Konus (26) umgebenden Bereich des Innenraumes (I) der Waschkolonne (2) angeordnet ist.

7. Einrichtung nach Anspruch 6, **dadurch gekennzeichnet, dass** der Konus (26) einen oberen umlaufenden Rand (26a) aufweist, der mit einer umlaufenden Innenseite (20a) des Mantels (20) verbunden ist.

8. Einrichtung nach Anspruch 6 oder 7, **dadurch gekennzeichnet, dass** am Konus (26) eine Heizeinrichtung (25) zum Beheizen des Konus (26) vorgesehen ist.

9. Einrichtung nach einem der vorhergehenden Ansprüche, **dadurch gekennzeichnet, dass** die Einrichtung (1) ein im Innenraum (I) der Waschkolonne (2) angeordnetes Schutzelement (27) aufweist, das oberhalb des Trichters (36) angeordnet ist und diesen überdeckt, wobei das Schutzelement (27) einen umlaufenden Rand (27a) aufweist, der mit einer umlaufenden Innenseite (20a) des Mantels (20) einen Ringspalt (28) ausgebildet.

10. Einrichtung nach Anspruch 6, **dadurch gekennzeichnet, dass** der Konus (26) einen umlaufenden oberen Rand (26a) aufweist, der beabstandet zu einer umlaufenden Innenseite (20a) des Mantels (20a) angeordnet ist, so dass der oberen Rand (26a) einen Ringspalt (28) mit der Innenseite (20a) bildet.

11. Einrichtung nach Anspruch 10, **dadurch gekennzeichnet, dass** die Einrichtung (1) ein im Innenraum (I) der Waschkolonne (2) angeordnetes Abdeckelement (200) aufweist, insbesondere in Form eines Abdeckblechs, wobei das Abdeckelement (200) von der Innenseite (20a) des Mantels (20) der Waschkolonne (2) in den Innenraum (I) der Waschkolonne (2) abragt und den Ringspalt (28) überdeckt.

12. Einrichtung nach einem der vorhergehenden Ansprüche, **dadurch gekennzeichnet, dass** die Einrichtung (1) ein im Innenraum (I) der Waschkolonne (2) angeordnetes umlaufendes Schutzelement (202) aufweist, insbesondere in Form eines Schutzblechs, wobei das Schutzelement (202) einen oberen Randabschnitt (26b) des Konus (26) umgibt.

13. Einrichtung nach einem der vorhergehenden Ansprüche, **dadurch gekennzeichnet, dass** im Innenraum (I) der Waschkolonne (2) eine Abdeckhaube (203) angeordnet ist, wobei die Abdeckhaube (203) den Trichter (36) überdeckt und/oder im Konus (26) angeordnet ist.

14. Einrichtung nach einem der vorhergehenden Ansprüche, **dadurch gekennzeichnet, dass** die Einrichtung (1) eine Abzugsleitung (300) zum Abziehen einer Spülflüssigkeit (SP) aus dem Sumpf (23) der Waschkolonne (2) aufweist, wobei die Abzugsleitung (300) außerhalb des Konus (26) vom Boden (21) der Waschkolonne (2) abgeht und den Sumpf (23) mit dem Schwerkraftabscheider (3) verbindet.

15. Verfahren zum Betreiben einer Einrichtung (1) nach einem der vorhergehenden Ansprüche, **dadurch gekennzeichnet, dass** ein Spaltgasstrom (S) in den Innenraum (I) der Waschkolonne (2) eingeleitet wird und im Gegenstrom mit einem wässrigen Waschmittel (W) beaufschlagt wird, wobei wässriges Waschmittel (W), das leichte Kohlenwasserstoffe aufweist, über den Trichter (36) aus dem Sumpf (23) der Waschkolonne (2) in den Schwerkraftabscheider (3) geführt wird, wo leichte Kohlenwasserstoffe aus dem wässrigen Waschmittel (W) abgetrennt werden, und wobei bevorzugt Koks und schwere Kohlenwasserstoffe über den Konus (26) und den Abzugsstutzen (24) aus dem Sumpf (23) der Waschkolonne (2) abgezogen werden.
